# EUROPEAN PATENT APPLICATION

(11) **EP 3 768 026 A1**
(43) Date of publication of application: **20.01.2021**
(21) Application number: 19792643.9
(22) Date of filing: 17.04.2019
(51) Int. Cl.: H04W 72/12

(54) **ELECTRONIC DEVICE AND METHOD FOR WIRELESS COMMUNICATION, AND COMPUTER-READABLE STORAGE MEDIUM**

(30) Priority: 23.04.2018 CN 201810367720
(71) Applicant: Sony Corporation, 108-0075 Tokyo (JP)
(72) Inventor: CAO, Jianfei, Beijing 100028 (CN)
(74) Representative: D Young & Co LLP
(86) International application number: PCT/CN2019/082986
(87) International publication number: WO 2019/205997

(57) **Abstract**

Provided are an electronic device and method for wireless communication, and a computer-readable storage medium. The electronic device comprises a processing circuit, which is configured to: determine paired beam pairs between a user equipment and a base station, each of the beam pairs comprising a transmitting beam of the base station and a receiving beam of the user equipment; and determine one or more receiving beams needing to be used for receiving a group shared physical downlink control channel from the base station, the group shared physical downlink control channel bearing control information for one group of user equipments and being transmitted via a plurality of transmitting beams after the base station carries out beamforming.

## Description

The present application claims priority to Chinese Patent Application No. 201810367720.X, titled "ELECTRONIC DEVICE AND METHOD FOR WIRELESS COMMUNICATION, AND COMPUTER-READABLE STORAGE MEDIUM", filed on April 23, 2018 with the China National Intellectual Property Administration, which is incorporated herein by reference in its entirety.

### FIELD

The present disclosure relates to the technical field of wireless communications, and in particular to configuration of a downlink control channel in a wireless communication system. More particularly, the present disclosure relates to an electronic apparatus for wireless communications, a method for wireless communications and a computer-readable storage medium.

### BACKGROUND

As a radio access manner for next generation of the long term evolution (LTE), new radio (NR) is a radio access technology (RAT) different from the LTE. The NR is an access technology capable of being applied in various use cases such as enhanced mobile broadband (eMBB), massive machine type communications (mMTC), ultra reliable and low latency communications (URLLC).

At present, in a specified NR (which is also referred to as 5G) standard, in order to enable some user equipment (UE) receive some common information, a group common physical downlink control channel (GC-PDCCH) is defined. The GC-PDCCH is configured to carry information important to a group of UE such as slot format indicator (SFI). The SFI indicates positions of uplink orthogonal frequency division multiplexing (OFDM) symbols and downlink OFDM symbols of a slot for the UE.

The group of UE share contents in the GC-PDCCH. The GC-PDCCH occupies slot positions in a downlink channel, where the slot positions are also in a control region. In addition, even if the UE cannot acquire the contents in the GC-PDCCH through decoding, it does not influence the UE to complete subsequent processes.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for wireless communications is provided. The electronic apparatus for wireless communications includes processing circuitry. The processing circuitry is configured to: determine beam pairs being paired between user equipment (UE) and a base station (BS), each of the beam pairs including an emitting beam of the BS and a receiving beam of the UE; and determine one or more receiving beams to be used in receiving a group-common physical downlink control channel (GC-PDCCH) from the BS, the GC-PDCCH carrying control information for a group of UE and being transmitted in multiple emitting beams after being beam-formed by the BS.

According to an aspect of the present disclosure, a method for wireless communications is provided. The method for wireless communications includes: determining beam pairs being paired between user equipment (UE) and a base station (BS), each of the beam pairs including an emitting beam of the BS and a receiving beam of the UE; and determining one or more receiving beams to be used in receiving a group-common physical downlink control channel (GC-PDCCH) from the BS, the GC-PDCCH carrying control information for a group of UE and being transmitted in multiple emitting beams after being beam-formed by the BS.

According to another aspect of the present disclosure, an electronic apparatus for wireless communications is provided. The electronic apparatus for wireless communications includes processing circuitry. The processing circuitry is configured to: determine beam pairs being paired between user equipment (UE) and a base station (BS), each of the beam pairs including an emitting beam of the BS and a receiving beam of the UE; and determine multiple emitting beams to be used for transmitting a group-common physical downlink control channel (GC-PDCCH), the GC-PDCCH being transmitted in the multiple emitting beams by being beam-formed and carrying control information for a group of UEs.

According to another aspect of the present disclosure, a method for wireless communications is provided. The method for wireless communications includes: determining beam pairs being paired between user equipment (UE) and a base station (BS), each of the beam pairs including an emitting beam of the BS and a receiving beam of the UE; and determining multiple emitting beams to be used for transmitting a group-common physical downlink control channel (GC-PDCCH), the GC-PDCCH being transmitted in the multiple emitting beams by being beam-formed and carrying control information for a group of UEs.

According to other aspects of the present disclosure, there are further provided computer program codes and computer program products for implementing the methods for wireless communications above, and a computer readable storage medium having recorded thereon the computer program codes for implementing the methods for wireless communications described above.

With the electronic apparatuses and the methods according to the present disclosure, the GC-PDCCH is transmitted in multiple emitting beams by being beam-formed to implement beam scanning of the GC-PDCCH in space, thereby increasing a coverage range of the GC-PDCCH, such that more UE are capable of receiving the GC-PDCCH and acquiring contents in the GC-PDCCH.

These and other advantages of the present disclosure will be more apparent by illustrating in detail a preferred embodiment of the present disclosure in conjunction with accompanying drawings below.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 is a block diagram of functional modules of an electronic apparatus for wireless communications according to an embodiment of the present disclosure;
Figure 2 is a schematic diagram showing that a transmission terminal antenna array generates multiple emitting beams;
Figure 3 is a schematic diagram showing that a GC-PDCCH is transmitted in multiple emitting beams;
Figure 4 is a schematic diagram showing that a GC-PDCCH is transmitted in multiple emitting beams in a case that a monitor period of the GC-PDCCH is k slots;
Figure 5 is a schematic diagram showing that a GC-PDCCH is transmitted in different emitting beams in a case that two TRPs serves a same cell;
Figure 6 is a block diagram of functional modules of an electronic apparatus for wireless communications according to another embodiment of the present disclosure;
Figure 7 is a block diagram of functional modules of an electronic apparatus for wireless communications according to another embodiment of the present disclosure;
Figure 8 is a block diagram of functional modules of an electronic apparatus for wireless communications according to another embodiment of the present disclosure;
Figure 9 is a schematic diagram showing information flow of transmitting and receiving a GC-PDCCH in multiple beams between a BS and a UE;
Figure 10 is a schematic diagram showing information flow of a beam pair link failing detection based on a GC-PDCCH between a BS and a UE.
Figure 11 is a flowchart of a method for wireless communications according to an embodiment of the present disclosure;
Figure 12 is a flowchart of a method for wireless communications according to another embodiment of the present disclosure;
Figure 13 is a block diagram showing a first example of a schematic configuration of an eNB or a gNB to which the technology of the present disclosure may be applied;
Figure 14 is a block diagram showing a second example of a schematic configuration of an eNB or a gNB to which the technology of the present disclosure may be applied;
Figure 15 is a block diagram showing an example of a schematic configuration of a smartphone to which the technology according to the present disclosure may be applied;
Figure 16 is a block diagram showing an example of a schematic configuration of a car navigation apparatus to which the technology of the present disclosure may be applied; and
Figure 17 is a block diagram of an exemplary block diagram illustrating the structure of a general purpose personal computer capable of realizing the method and/or device and/or system according to the embodiments of the present disclosure.

### DETAILED DESCRIPTION OF EMBODIMENTS

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

### <First embodiment

As described above, a GC-PDCCH is shared by a group of UE. Contents in the GC-PDCCH may be used to guide a subsequent action of the UE. For example, for a scheduled UE, the contents may be used to prepare for decoding of a PDCCH or a physical downlink shared channel (PDSCH), switching between uplink and downlink, an ACK/NACK feedback of a hybrid automatic repeat request (HARQ) and the like. For an unscheduled UE, the contents may be used for behaviors such as reporting channel state information (CSI). In addition, configuration information of a control resource set (CORESET) of a UE-specific PDCCH may also be adjusted through the GC-PDCCH.

Therefore, more UE are expected to be capable of receiving the GC-PDCCH and successfully decoding the contents in the GC-PDCCH.

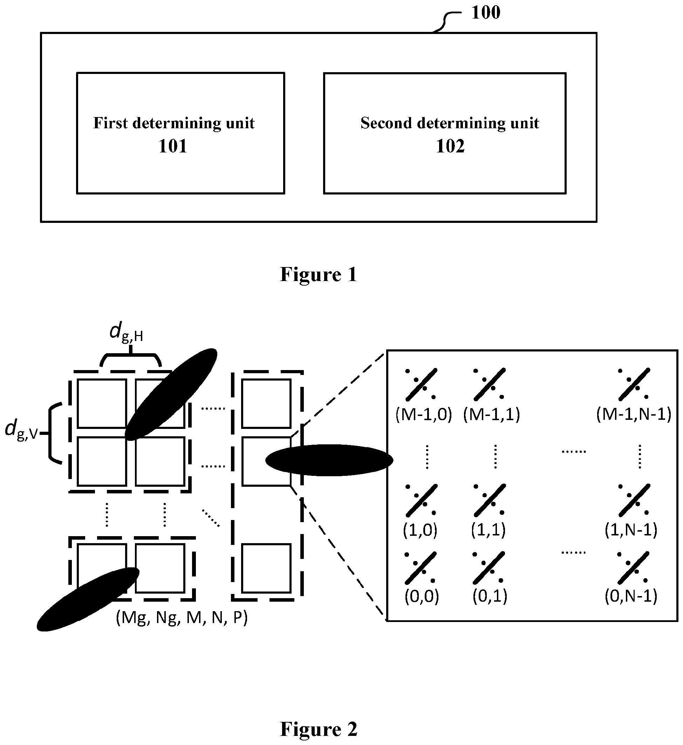

Figure 1 is a block diagram of functional modules of an electronic apparatus 100 for wireless communications according to an embodiment of the present disclosure. As shown in Figure 1, the electronic apparatus 100 includes a first determining unit 101 and a second determining unit 102. The first determining unit 101 is configured to determine beam pairs being paired between UE and a base station (BS). Each of the beam pairs includes an emitting beam of the BS and a receiving beam of the UE. The second determining unit 102 is configured to determine one or more receiving beams to be used in receiving a GC-PDCCH from the BS. The GC-PDCCH carries control information for a group of UE and is transmitted in multiple emitting beams after being beam-formed by the BS.

The first determining unit 101 and the second determining unit 102 may be implemented by one or more processing circuitries. The circuitry may be implemented as chips. In addition, it is to be understood that various functional units in the apparatus shown in Figure 1 are logical modules divided based on functions which the functional units implement, and are not intended to limit particular implementations. This is also applicable to examples of other electronic apparatuses described subsequently.

The electronic apparatus 100 may be arranged on the UE side or communicatively connected to the UE. Here, it is further to be noted that the electronic apparatus 100 may be implemented in a chip level or an apparatus level. For example, the electronic apparatus 100 may serve as the UE itself and may further include external devices such as storage and transceiver (which are not shown in Figure 1). The storage may be configured to store programs which are required to be executed when the UE implements various functions and related data information. The transceiver may include one or more communication interfaces to support communications with other apparatus (for example, a BS, other UE and the like). Implementations of the transceiver are not limited herein. This is also applicable to other configuration examples of the electronic apparatus on the UE side described subsequently.

In the embodiment, the first determining unit 101 is configured to perform beam training between a BS and UE, to determine a receiving beam with which each emitting beam of the BS is paired. An emitting beam of the BS and a receiving beam of the UE form a beam pair, where the emitting beam is paired with the receiving beam. A receiving beam and an emitting beam in different directions respectively correspond to a set of specific parameters of a spatial filter. The spatial filter is applied to a transmitting antenna array to transmit an emitting beam in a predetermined direction. Alternatively, the spatial filter is applied to a receiving antenna array to receive a receiving beam in a predetermined direction. Figure 2 is a schematic diagram showing that a transmitting terminal antenna array generates emitting beams. In Figure 2, Mg and Ng respectively represent the number of antenna sub-panels in a vertical direction and in a horizontal direction. A scale of antenna arrays in each of the antenna sub-panels is M×N. P represents the polarization characteristic of antennas. For example, P being equal to 1 indicates a single-polarized antenna, and P being equal to 2 indicates a dual-polarized antenna. Antennas in the example shown in Figure 2 are dual-polarized.

In addition, the first determining unit 101 may be further configured to acquire link quality of each beam pair by measuring channel quality. Specifically, the first determining unit 101 may be configured to measure reference signal receiving power or a block error rate. Next, the UE transmits information of beam pairs determined by the first determining unit 101 to the BS. As described above, the UE may transmit the information of the beam pairs to the BS through the transceiver.

In an example, when the UE initially accesses in, the BS performs beam scanning by transmitting a downlink synchronization signal block (SSB). The first determining unit 101 is configured to measure the SSB to acquire a direction of an emitting beam (the number of the emitting beams may be one or more) of the BS, which is suitable for the UE, in the downlink, and record a receiving beam with which the emitting beam is paired, so as to form one or more beam pairs. For example, the UE may report the emitting beam of the BS, which is suitable for the UE, to the BS through a physical random access channel (PRACH). Exemplarily, the UE may transmit a SSB resource indicator (SSBRI) as a beam identifier to the BS, to report the emitting beam suitable for the present UE.

In another example, when the UE accesses in the network and is in a radio resource control (RRC) connected state, the BS configures specific channel state information-reference signal (CSI-RS) resources for the UE to perform finer beam scanning. Similarly, the first determining unit 101 is configured to measure the CRI-RS to acquire a direction of an emitting beam of the BS, which is suitable for the present UE, in the downlink, and record a receiving beam with which the emitting beam is paired, so as to form one or more beam pairs. For example, the UE may report the emitting beam of the BS, which is suitable for the present UE, to the BS through a physical uplink control channel (PUCCH). Exemplarily, the UE may transmit a CSI-RS resource indicator (CRI) to the BS as a beam identifier, to report the emitting beam suitable for the present UE. For example, in a case that the UE reports CRI1 and CRI3 to the BS, it is indicated that an emitting beam 1 and an emitting beam 3 respectively corresponding to CRI1 and CRI3 are suitable for the present UE.

In addition, the first determining unit 101 may be further configured to measure link quality of a beam pair by measuring reference signal receiving power (RSRP) or reference signal receiving quality (RSRQ) of the CSI-RS.

In order to receive the GC-PDCCH in a proper direction, the second determining unit 102 is required to determine which one of receiving beams is to be used to receive the GC-PDCCH (in a case that the UE has sufficient capability, the second determining unit 102 may determine which ones of the receiving beams are to be used to receive the GC-PDCCH). The GC-PDCCH carries control information for a group of UE and is transmitted in multiple specific directions by being beam-formed through the BS, that is, the GC-PDCCH is transmitted in multiple specific emitting beams. Since the GC-PDCCH is transmitted in multiple directions, which is equivalent to perform partial beam scanning, thereby improving a probability that more UEs receive the GC-PDCCH.

In an example, the second determining unit 102 may be configured to determine a receiving beam in a beam pair with the best link quality as the receiving beam for receiving the GC-PDCCH. In this case, since the UE does not know which emitting beams are to be used by the BS to transmit the GC-PDCCH, the receiving beam for receiving the GC-PDCCH may be selected based on a specific strategy. For example, in addition to selecting the receiving beam in the beam pair with the best link quality, the second determining unit 102 may be configured to select, based on historical experiences, a receiving beam matching an emitting beam of the BS, which is most commonly used for the UE, as the receiving beam for receiving the GC-PDCCH.

In another example, the second determining unit 102 is configured to determine, based on a CORESET configured for the UE by the BS, a receiving beam to be used for receiving the GC-PDCCH. The CORESET includes time-frequency resources and space domain resources for the GC-PDCCH. The CORESET is used to inform the UE of time-frequency resources and space domain resources where to receive the GC-PDCCH. In this case, the BS informs the UE of a position of the GC-PDCCH in advance. The position of the GC-PDCCH includes a time-frequency position and a space position.

The second determining unit 102 may be configured to determine the emitting beam of the BS based on the above space domain resources, and receive the GC-PDCCH by using a receiving beam paired with the emitting beam. For example, in a case that there are multiple receiving beams paired with multiple emitting beams, that is, there are multiple beam pairs including the multiple emitting beams, the second determining unit 102 may be configured to select the receiving beam for receiving the GC-PDCCH based on link quality of the multiple beam pairs. Preferably, a receiving beam in a beam pair with the best link quality may be selected as the receiving beam for receiving the GC-PDCCH.

For example, the space domain resources for the GC-PDCCH include directivity information for the beam-forming. The second determining unit 102 may be configured to determine an emitting beam emitted by the BS based on the directivity information, thereby determining a receiving beam paired with the emitting beam as the receiving beam for receiving the GC-PDCCH.

Exemplarily, the second determining unit 102 is further configured to acquire information of the CORESET via a high level signaling. The high level signaling is radio resource control (RRC) signaling, for example. The CORESET in the RRC signaling includes a group-common transmission configuration indicator (GC-TCI) to indicate the space domain resources for the GC-PDCCH.

Alternatively, the high level signaling may also include both the RRC signaling and the media access control (MAC) signaling. The CORESET in the RRC signaling includes GC-TCI to indicate the space domain resources for the GC-PDCCH, and the MAC signaling is used to further select a GC-TCI in the RRC signaling. For example, the RRC signaling is configured with multiple TCI states, for example, the RRC signaling is configured with M TCI states. The MAC signaling is used to select K TCI states from among the M TCI states to provide a reference for the UE when the UE receives the GC-PDCCH.

For example, the GC-TCI may include information of a reference signal beam which is in quasi co-location with the GC-PDCCH. Specifically, each TCI state includes an ID of the TCI state, a Quasi Co-Location (QCL) type 1 and a QLC type 2. Each of the QCL 1 and the QCL 2 includes QCL information. A reference signal of the QCL information is the CSI-RS, the SSB or a tracking reference signal (TRS). Types of QCL include Type A, Type B, Type C and Type D. The Type D is related to the spatial filter, that is, the type D is related to the receiving beam. For example, the TCI states include [SSB1|QCL Type 4, SSB3|QCL Type 4, CSI-RS Resource 5|QCL Type 4, TRS7|QCL Type 4]. The QCL Type 4 refers to characteristic of the spatial quasi co-location. In addition, the TCI states correspond to demodulation reference signal (DMRS) of the GC-PDCCH in a manner known to both the BS and the UE. Therefore, after the GC-TCI states are configured for the UE by the BS, the UE may acquire knowledge of on which time-frequency resources and with which receiving beam to detect the GC-PDCCH.

In a case that the CORESET is configured by the RRC signaling, for example, the BS may configure a parameter tci-StatesGCPDCCH for the UE. The parameter tci-StatesGCPDCCH includes IDs of multiple TCI states, such that the UE may sequentially refer to reference signals in the multiple TCI states to receive the contents in the GC-PDCCH. The parameter tci-StatesGCPDCCH is a subset of the TCI states and is used to provide a QCL relationship between a reference signal in a set of downlink reference signals and DMRS ports of the GC-PDCCH.

It is to be noted that, different from configurations of the TCI states in the CORESET of the UE-specific PDCCH, TCI states of the GC-PDCCH are configured for multiple UEs. Therefore, for one of the multiple UEs, there may be no proper receiving beam for receiving all CORESETs. Thus, in configuration of the CORESET, the TCI states of the GC-PDCCH and the TCI states of the UE-specific PDCCH for the UE need to be configured separately.

As described above, one CORESET may include multiple GC-TCIs. However, the CORESET may include only one GC-TCI. In this case, multiple CORESETs are configured to emit multiple GC-PDCCH beams.

It is to be noted that the UE is further required to know the specific time at which the UE refers to each of the GC-TCI states. For example, the UE is required to know which GC-TCI state is to be referred on which OFDM symbol, so as to adjust the receiving beam. In addition, due to limitation to the beam forming from radio frequency sections in a base station antenna, multiple GC-PDCCHs may be required to be transmitted in different OFDM symbols.

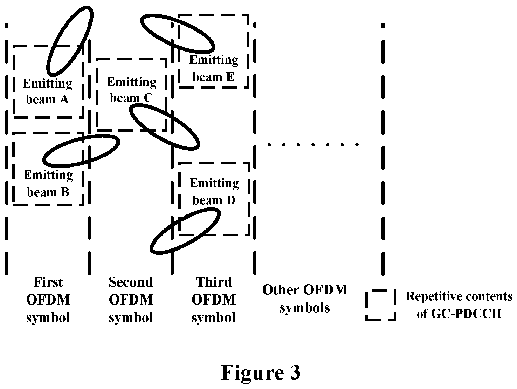

In order to facilitate understanding, Figure 3 shows a schematic drawing that the GC-PDCCH is transmitted in multiple emitting beams. It can be seen that within one slot, emitting beams are transmitted in different OFDM symbols in different directions. In addition, since GC-PDCCHs in the respective emitting beams have same contents, a possibility of receiving the GC-PDCCH by the UE is improved, thereby increasing the number of UEs that receive the GC-PDCCH.

In addition, the second determining unit 102 is further configured to acquire, from the base station, a monitor period configuration for monitoring the GC-PDCCH, and perform decoding of the GC-PDCCH based on the monitor period configuration.

For the GC-PDCCH, since contents in the GC-PDCCH may be dynamically changed per slot, the BS dynamically configures SFI for each slot. However, the contents in the GC-PDCCH may also remain unchanged for multiple slots (for example, k slots, where k is an integer greater than 1). In this case, the monitor period in which the UE monitors the GC-PDCCH becomes k slots. The BS may transmit GC-PDCCHs having same contents in the k slots, that is, time-frequency resources for transmitting the GC-PDCCH are increased. Accordingly, the GC-PDCCH may be transmitted in more beams, thereby further increasing coverage range of the GC-PDCCH.

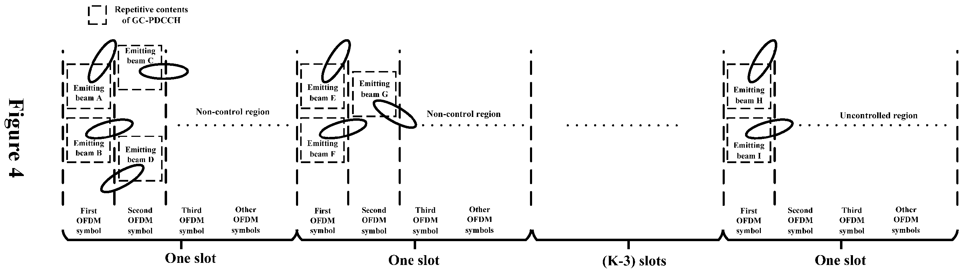

Figure 4 is a schematic diagram showing that the GC-PDCCH is transmitted in multiple emitting beams in a case that the monitor period of the GC-PDCCH is k slots. As shown in Figure 4, in a case that the monitor period is one slot, the GC-PDCCH is transmitted only in an emitting beam A, an emitting beam B, an emitting beam C and an emitting beam D. In a case that that the monitor period is two slots, the GC-PDCCH can be transmitted by using additional emitting beam E, emitting beam F and emitting beam G Even in the last slot, the BS may transmit the GC-PDCCH by further using additional emitting beam H and emitting beam I. The number of the emitting beams for transmitting the GC-PDCCH is increased with increasing of the monitor period.

On the other hand, it is expected to decode the contents in the GC-PDCCH as early as possible. Therefore, in practical applications, the GC-PDCCH may be not transmitted in latter slots among the k slots.

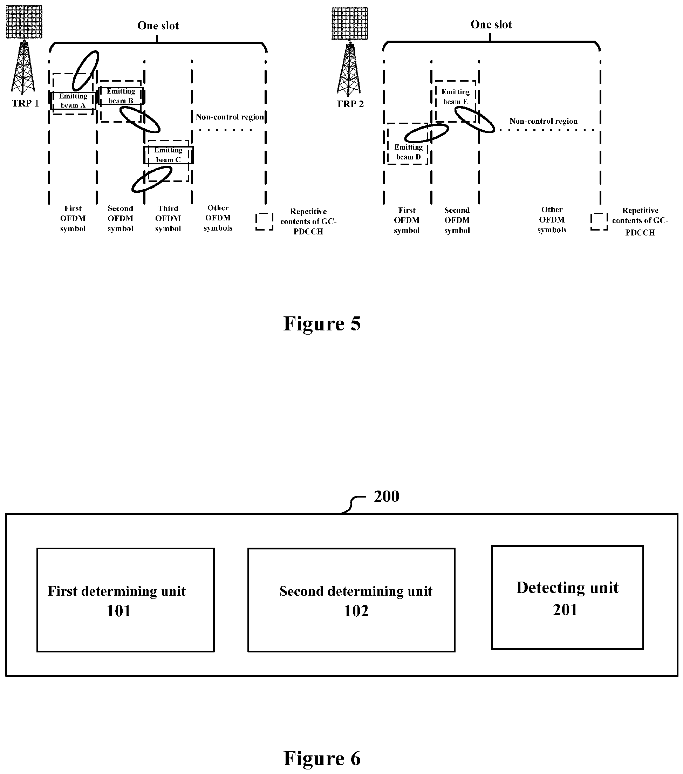

In addition, in a case that multiple transmit receive points (TRPs) serves the same physical cell, that is, the multiple TRPs share the same cell ID, the GC-PDCCH may be transmitted in multiple emitting beams after being beam-formed respectively by the multiple TRPs. In other words, the multiple TRPs transmit GC-PDCCHs having the same contents to the UE through respective emitting beams of the TRPs. Each of the multiple TRPs may configure respective CORESET separately. Alternatively, one or more of the multiple TRPs may configure CORESETs of all of the TRPs. As an example, Figure 5 is a schematic diagram showing that the GC-PDCCH is transmitted in different emitting beams in a case that two TRPs serve the same cell. As can be seen from Figure 5, TRP1 and TRP2 transmit the GC-PDCCH on different time-frequency resources respectively by using different emitting beams.

In summary, the electronic apparatus 100 according to the embodiment receives the GC-PDCCH transmitted in multiple emitting beams after being beam-formed by the BS, so as to increase a probability that the GC-PDCCH is received, thereby improving the utilization efficiency of the GC-PDCCH.

### <Second embodiment

Figure 6 is a block diagram of functional modules of an electronic apparatus 100 according to another embodiment of the present disclosure. As shown in Figure 6, besides the first determining unit 101 and the second determining unit 102 as shown in Figure 1, the electronic apparatus 100 further includes a detecting unit 103. The detecting unit 103 is configured to perform blind-decoding on the GC-PDCCH in a search space of time-frequency resources where the GC-PDCCH is received, and judge whether the GC-PDCCH is applied to a present UE by using a group common radio network temporary identifier (GC-RNTI). The BS configures the GC-RNTI for the electronic apparatus 100 in advance via a high level signaling, to facilitate the later judging. The BS may configure the same GC-RNTI for multiple different UEs, such that the GC-PDCCH may be applicable to a group of UE.

Similarly, the detecting unit 103 may be implemented by one or more processing circuitries. The processing circuitry may be implemented as chips. In addition, various functional units in the electronic apparatus shown in Figure 6 are logical modules divided based on functions which the functional units realize, and are not intended to limit specific implementations.

For example, the detecting unit 103 may be configured to perform a cyclical redundancy check (CRC) on contents of the GC-PDCCH in the search space of time-frequency resources where the GC-PDCCH is received. In a case that the CRC passes, it is indicated that the GC-PDCCH is for the present UE (that is, the present UE belongs to the group of UE which the GC-PDCCH is for and the present UE is a scheduled UE). In a case that the CRC fails, it is indicated that the GC-PDCCH is not for the present UE (that is, the present UE does not belong to the group of UE and the present UE is an unscheduled UE).

In the embodiment, alternatively/in addition, the detecting unit 103 may further be configured to measure RSRP of a reference signal (for example DMRS) or block error rate (BLER) of the received GC-PDCCH, to judge whether a link of a beam pair formed by the emitting beam and the receiving beam fails. For example, in a case that the RSRP is less than a predetermined threshold or the BLER is higher than a predetermined level, it is determined by the detecting unit 103 that the link of the beam pair fails. Since the GC-PDCCH appears early in time and is generally located on a first OFDM symbol in a control region, the UE may early find that the link of the beam pair fails with the operation of the detecting unit 103. In addition, for the unscheduled UE, similarly, the GC-PDCCH may also be used to detect failure of a link of a beam pair.

Through the operation of the detecting unit 103, in a case that a link of a beam pair fails, the UE may timely inform the BS of information that the link of the beam pair fails, such that the BS performs a corresponding operation such as adjusting an emitting beam for the UE.

### <Third embodiment

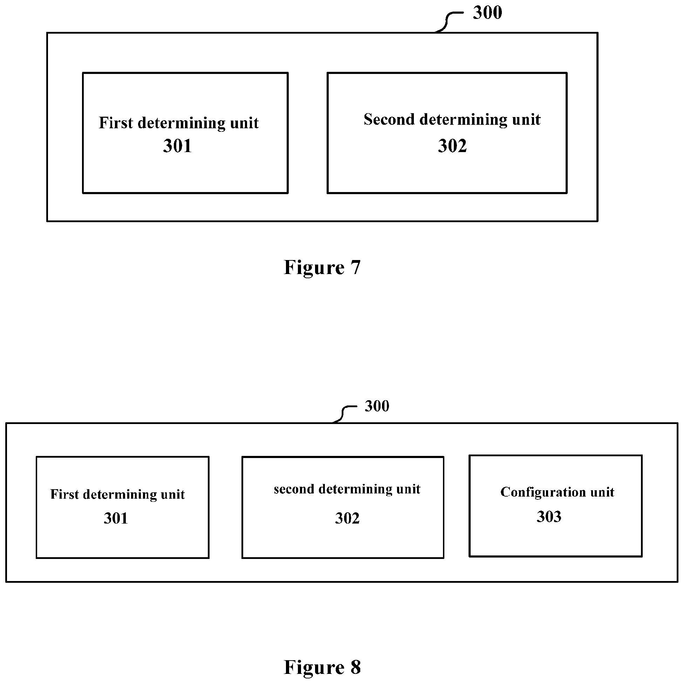

Figure 7 is a block diagram of functional modules of an electronic apparatus 300 according to another embodiment of the present disclosure. As shown in Figure 7, the electronic apparatus 300 includes a first determining unit 301 and a second determining unit 302. The first determining unit 301 is configured to determine beam pairs being paired between user equipment (UE) and a base station (BS). Each of the beam pairs includes an emitting beam of the BS and a receiving beam of the UE. The second determining unit 302 is configured to determine multiple emitting beams to be used for transmitting a group-common physical downlink control channel (GC-PDCCH). The GC-PDCCH is transmitted in the multiple emitting beams by being beam-formed and carries control information for a group of UE.

The first determining unit 301 and the second determining unit 302 may be implemented by one or more processing circuitries. The processing circuitry may be implemented as chips. In addition, it is to be understood that various functional units in the electronic apparatus shown in Figure 7 are logical modules divided based on functions which the functional units realize, and are not intended to limit specific implementations, which is applicable to examples of other electronic apparatuses described subsequently.

The electronic apparatus 700 may be arranged on a BS side or communicatively connected to a BS. Here, it is further to be noted that the electronic apparatus 700 may be implemented in a chip level or in an apparatus level. For example, the electronic apparatus 700 may serve as the BS itself and may include external devices such as storage and a transceiver (which are not shown in Figure 7). The storage may be configured to store programs which are required to be executed when the BS implements various functions, and related data information. The transceiver may include one or more communication interfaces to support communications with other apparatus (for example, UE, and another BS). Implementations of the transceiver are not limited herein, which is applicable to other configuration examples of the electronic apparatus on the BS side described subsequently.

As described in the first embodiment, as a functional module on the BS side, the first determining unit 301 is configured to perform beam training together with the UE. Specifically, the first determining unit 301 is configured to perform the beam training through SSB beam scanning or CSI-RS beam scanning. Related details are described in detail in the first embodiment, which are not repeated herein.

GC-PDCCH is a PDCCH used for a group of UE. UEs are grouped may be based on contents carried in the GC-PDCCH. For example, the GC-PDCCH may include SFI, which is used to indicate an uplink/downlink direction of a system at different time instants for some UEs that are capable of dynamically switching between downlink receiving and uplink transmitting. The GC-PDCCH may include a pre-emption indicator, which is configured to indicate presence of interferences for a part of UEs that suffer interferences from other UEs. The GC-PDCCH may include a power control indicator, which is used to indicate a UE whose uplink emitting power is required to be adjusted.

For a group of UE, the second determining unit 102 may be configured to determine the emitting beam to be used for transmitting GC-PDCCH based on one or more of the following: information of beam pairs between respective UE in the group of UE and the BS; and priority levels of the respective UEs.

For example, in a case that there is the same emitting beam suitable for multiple UEs in a group of UE, the same emitting beam is preferentially determined as the emitting beam for transmitting the GC-PDCCH. Alternatively, an emitting beam that is suitable for relatively more UEs is preferentially determined as the emitting beam for transmitting the GC-PDCCH. As a non-limiting example, for example, in a cell, a BS serves three UEs. After beam scanning via the CRI-RS, each of the three UEs reports emitting beams suitable for the UE to the BS. Specifically, UE1 reports CRI3, CRI5 and CRI7. UE2 reports CRI3 and CRI7. UE3 reports CRI7 and CRI9. In a case that it is required to transmit the GC-PDCCH only in one emitting beam, the second determining unit 102 may select the emitting beam corresponding to CRI7. In a case that the GC-PDCCH may be transmitted in two emitting beams, the second determining unit 102 may further select the emitting beam corresponding to CRI3 (CRI3 is reported by two UEs) in addition to CRI7.

Alternatively/in addition, the second determining unit 102 may also preferentially select an emitting beam that is suitable for a user with a high priority level. For example, a priority level of a UE may include whether the UE is scheduled. Generally, since a scheduled UE has higher requirement in decoding the GC-PDCCH than an unscheduled UE, a higher priority level can be set for the scheduled UE than that for the unscheduled UE.

After the emitting beam is determined, the BS performs beam-forming on the GC-PDCCH carrying control information of the group of UE and transmits the GC-PDCCH in the determined emitting beam.

In an example, as shown in Figure 8, the electronic apparatus 300 further includes a configuration unit 303. The configuration unit 303 is configured to configure a CORESET for the UE. The CORESET includes time-frequency resources and space domain resources for the GC-PDCCH. For example, the space domain resources for the GC-PDCCH may include directivity information of the beam-forming. The directivity information may indicate which emitting beams will be used for transmitting the GC-PDCCH by the BS.

For example, the configuration unit 303 may be configured to provide information of the CORESET to the UE via a high level signaling. The high level signaling may be RRC signaling. The CORESET in the RRC signaling includes a GC-TCI to indicate the space domain resources for the GC-PDCCH. The GC-TCI may include information of a reference signal beam which is in quasi co-location with the GC-PDCCH beam. Details of the GC-TCI are given in the first embodiment and are similarly applicable to the embodiment, which are not repeated herein.

In addition, the high level signaling may include both the RRC signaling and the MAC signaling. The CORESET in the RRC signaling includes GC-TCIs to indicate the space domain resources for the GC-PDCCH, and the MAC signaling is used to further select a GC-TCI in the RRC signaling.

One CORESET may include one or more GC-TCIs. Specifically, the BS may configure one TCI state in one CORESET, but configure multiple CORESETs for a group of UE to transmit the GC-PDCCH in multiple emitting beams. In this case, due to limiting on the beam-forming from a radio frequency section of a base station antenna, the multiple CORESETs are required to be transmitted in different OFDM symbols.

In addition, in a case that multiple GC-TCI states are configured, the configuration unit 203 may further be configured to provide time information to the UE, such that the UE can know a time at which each of the GC-TCI states is referred to so as to adjust the receiving beam. For example, the UE can know which TCI state is to be referred to in which OFDM symbol.

As described above, for the GC-PDCCH, since contents in the GC-PDCCH may be dynamically changed per slot, the BS dynamically configures SFI for each slot. However, the contents in the GC-PDCCH may also remain unchanged for multiple slots (for example, k slots, where k is an integer greater than 1). In this case, the BS dynamically configures the SFI every k slots. A value of k may be determined by the BS. Correspondingly, the configuration unit 303 may be configured to set, for the UE, a monitor period configuration for monitoring the GC-PDCCH, and transmit the GC-PDCCH based on the monitor period configuration.

When the monitor period configuration indicates that the monitor period is more than one slot, the configuration unit 303 may be configured to transmit the GC-PDCCH in multiple slots respectively. The GC-PDCCHs have same contents, as shown in Figure 4. By increasing the time-frequency resources for transmitting the GC-PDCCH, the GC-PDCCH may be transmitted in more beams, thereby further increasing a coverage range of the GC-PDCCH. It is to be noted that even if the monitor period is more than one slot, the GC-PDCCH may be transmitted only in a first slot, which is not limited.

In addition, in a scenario that multiple TRPs serve a physical cell, the electronic apparatus 300 may be located on a TRP side. The configuration unit 303 is configured to transmit a GC-PDCCH carrying the same contents as that of GC-PDCCHs transmitted by other TRPs in the same cell. Each of the multiple TRPs (specifically, the configuration unit 303) may configure respective CORESET independently. Alternatively, one or more of the multiple TRPs may configure CORESETs of all of the TRPs. An example is given with reference to Figure 5. As shown in Figure 5, TRP1 and TRP2 transmit GC-PDCCHs with the same contents on different time-frequency resources respectively by using different emitting beams.

As described in the second embodiment, the UE may measure RSRP of DMRS or BLER of the received GC-PDCCH, to judge whether a link of a beam pair fails and provide the BS with a beam pair link failure indicator in a case that it is determined that the link of the beam pair fails. Accordingly, the configuration unit 303 in the embodiment may acquire the beam pair link failure indicator from the UE.

In summary, the electronic apparatus 300 according to the embodiment transmits the GC-PDCCH in multiple emitting beams by beam-forming, so as to increase the coverage range of the GC-PDCCH and a probability that the UE receives the GC-PDCCH, thereby improving utilization efficiency of the GC-PDCCH.

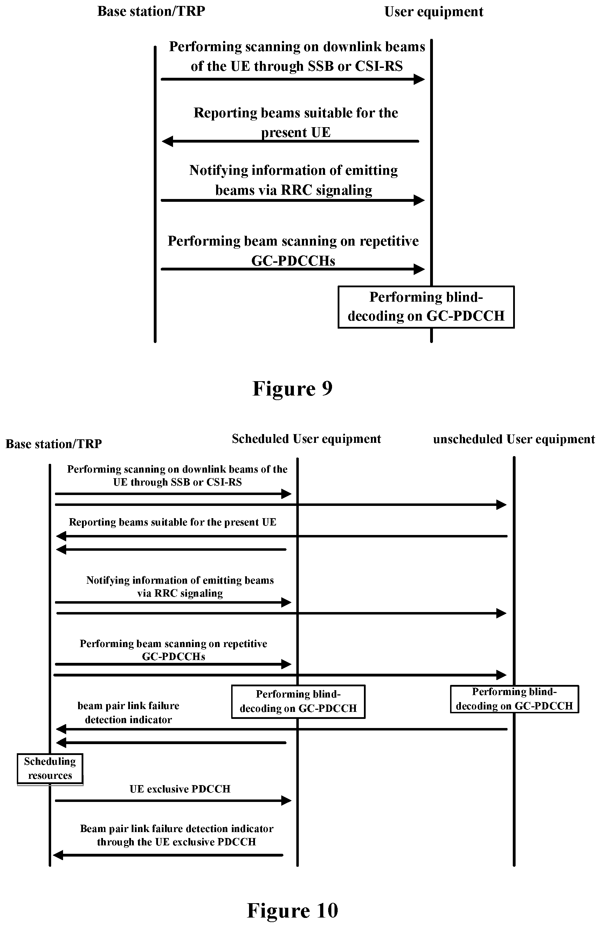

In order to facilitate understanding, Figure 9 is a schematic diagram showing information procedure of transmitting and receiving a GC-PDCCH in multiple beams between the BS and UE. As shown in Figure 9, the BS performs downlink beam scanning on the UE through the SSB or the CRI-RS. The UE detects the SSB or the CRI-RS and reports an emitting beam suitable for the present UE to the BS. For example, the UE may report the emitting beam suitable for the present UE to the BS by using the above mentioned SSBRI or CRI. Next, the BS determines, with respect to a group of UE, emitting beams to be used in transmitting the GC-PDCCH to the group of UEs and informs the UE of the determined emitting beams by using the RRC signaling. For example, GC-TCIs may be included in the CORESET to represent the emitting beams for transmitting the GC-PDCCH. One CORESET may include one or more GC-TCIs. After receives the RRC signaling, the UE may know which emitting beams will be used for transmitting the GC-PDCCH, so as to select a receiving beam paired with one of the emitting beams. Next, the BS performs beam-forming and transmits GC-PDCCHs carrying the same contents in multiple emitting beams, that is, the BS performs beam scanning on GC-PDCCHs carrying repetitive contents. The UE receives the GC-PDCCHs by using the selected receiving beam. In addition, the UE performs blind-decoding on the received GC-PDCCH in a search space of time-frequency resources where the GC-PDCCH is received to judge whether the GC-PDCCH is for the present UE.

Figure 10 is a schematic diagram showing information procedure of beam pair link failure detecting based on a GC-PDCCH between the BS and the UE. Processes in the upper half of Figure 10 are the same as the processes in Figure 9, which are not repeated herein. After receiving the GC-PDCCHs, in addition to performing the blind-decoding in Figure 9, alternatively or in addition, the UE may further measure RSRP of DMRS or BLER of the received GC-PDCCH to judge whether a link of a beam pair fails, and transmit a beam pair link failure indicator to the BS. In addition, the UE may further receive a beam monitoring failing response (not shown in Figure 10) transmitted by the BS. It is to be noted that a scheduled UE and an unscheduled UE each may perform the beam pair link failure detecting based on the GC-PDCCH. Next, the BS schedules resources for the UE and transmits a UE-specific PDCCH to the UE. In addition, the UE performs the beam pair link failure detecting based on the UE-specific PDCCH.

The BS in Figure 9 and Figure 10 may also be the TRP. It is to be noted that the information procedure shown in Figure 9 and Figure 10 are merely schematic, and do not limit the present disclosure.

### <Fourth embodiment

In the process of describing the electronic apparatus for wireless communications in the embodiments described above, obviously, some processing and methods are also disclosed. Hereinafter, an overview of the methods is given without repeating some details disclosed above. However, it should be noted that, although the methods are disclosed in a process of describing the electronic apparatus for wireless communications, the methods do not certainly employ or are not certainly executed by the aforementioned components. For example, the embodiments of the electronic apparatus for wireless communications may be partially or completely implemented with hardware and/or firmware, the methods for wireless communications described below may be executed by a computer-executable program completely, although the hardware and/or firmware of the electronic apparatus for wireless communications can also be used in the methods.

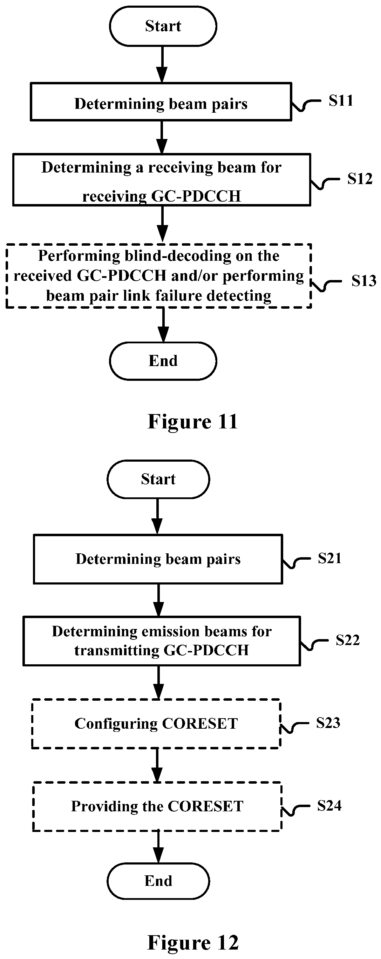

Figure 11 is a flowchart of a method for wireless communications according to an embodiment of the present disclosure. The method for wireless communications includes step S11 and step S12. In step S11, beam pairs being paired between UE and a BS are determined. Each of the beam pairs includes an emitting beam of the BS and a receiving beam of the UE. In step S12, one or more receiving beams to be used for receiving a GC-PDCCH from the BS are determined. The GC-PDCCH carries control information for a group of UE and is transmitted in multiple emitting beams after being beam-formed by the BS. The method for wireless communications may be performed on a UE side.

In addition, the GC-PDCCH may be transmitted in multiple emitting beams after being beam-formed respectively by multiple TRPs.

For example, in step S12, the receiving beam to be used in receiving the GC-PDCCH may be determined based on the CORESET configured for the UE by the BS. The CORESET includes time-frequency resources and space domain resources for the GC-PDCCH. The space domain resources for the GC-PDCCH may include directivity information for the beam-forming.

Before step S11, information of the CORESET may be acquired via a high level signaling. In an example, the high level signaling is RRC signaling. The CORESET in the RRC signaling incudes a GC-TCI to indicate the space domain resources for the GC-PDCCH. One CORESET may include one or more GC-TCIs.

In another example, the high level signaling includes both the RRC signaling and the MAC signaling. The CORESET in the RRC signaling includes a GC-TCI to indicate the space domain resources for the GC-PDCCH, and the MAC signaling is used to further select a GC-TCI among the GC-TCIs in the RRC signaling.

For example, the GC-TCI may include information of a reference signal beam which is in quasi co-location with the GC-PDCCH beam.

In step S12, the emitting beam of the BS may be determined based on the space domain resources. A receiving beam paired with the emitting beam is determined as the receiving beam to be used in receiving the GC-PDCCH. For example, the receiving beam for receiving the GC-PDCCH may be determined based on link quality of a beam pair including the determined emitting beam of the BS.

In addition, in step S12, a receiving beam in a beam pair with the best link quality may be determined as the receiving beam for receiving the GC-PDCCH, in a case that the BS does not inform the UE of information of the emitting beam of the GC-PDCCH in advance.

As shown in a dashed line block in Figure 11, the method for wireless communications may further include step S13. In step S13, blind-decoding is performed on the GC-PDCCH in a search space of time-frequency resources where the GC-PDCCH is received, and a GC-RNTI is used to judge whether the GC-PDCCH is for a present UE.

In step S13, alternatively and/or in addition, RSRP of DMRS or BLER of the received GC-PDCCH may be measured to judge whether a link of a beam pair formed by the emitting beam and the receiving beam fails. In addition, it is reported to the BS in a case that the beam pair link fails.

Although not shown in Figure 11, the above method for wireless communications may further include the following step: acquiring, from the BS, a monitor period configuration for monitoring the GC-PDCCH, and performing decoding on the GC-PDCCH based on the monitor period configuration. For example, the monitor period may be more than one slot.

Figure 12 is a flowchart of a method for wireless communications according to another embodiment of the present disclosure. The method for wireless communications includes step S21 and step S22. In step S21, beam pairs being paired between UE and a BS are determined. Each of the beam pairs includes an emitting beam of the BS and a receiving beam of the UE. In step S22, multiple emitting beams to be used for transmitting a GC-PDCCH are determined. The GC-PDCCH is transmitted in the multiple emitting beams by being beam-formed and carries control information for a group of UE. The method for wireless communications may be performed on a BS side or a TRP side.

In a case that the above method for wireless communications is performed on the TRP side, the transmitted GC-PDCCH may has the same contents with that in GC-PDCCHs transmitted by other TRPs in the same cell.

In step S22, the emitting beam to be used for transmitting may be determined based on one or more of the following: information of beam pairs between respective UEs in the group of UE and the BS; and priority levels of the respective UEs. For example, the priority level of a UE includes whether the UE is scheduled.

As shown in a dashed line block in Figure 12, the above method for wireless communications may further include step S23. In step S23, a CORESET is configured for the UE. The CORESET includes time-frequency resources and space domain resources for the GC-PDCCH. The space domain resources for the GC-PDCCH include directivity information for the beam-forming.

As shown in another dashed line block in Figure 12, the above method for wireless communications may further include step S24. In step S24, information of the CORESET may be provided to the UE via a high level signaling.

In an example, the high level signaling is RRC signaling. The CORESET in the RRC signaling includes a GC-TCI to indicate the space domain resources for the GC-PDCCH.

In another example, the high level signaling includes both the RRC signaling and the MAC signaling. The CORESET in the RRC signaling includes a GC-TCI to indicate the space domain resources for the GC-PDCCH, and the MAC signaling is used to further select a GC-TCI among the GC-TCIs in the RRC signaling. One CORESET may include one or more GC-TCIs.

For example, the GC-TCI includes information of a reference signal beam which is in quasi co-location with the GC-PDCCH beam.

In addition, not shown in Figure 12, the above method for wireless communications may further include the following step: setting, for the UE, a monitor period configuration for monitoring the GC-PDCCH, and transmitting the GC-PDCCH based on the monitor period configuration. When the monitor period configuration indicates that the monitor period is more than one slot, the GC-PDCCHs are transmitted in multiple slots respectively. The GC-PDCCHs have the same contents.

The above method for wireless communications may further include: acquiring a beam pair link failure indicator from the UE, which is obtained through measuring RSRP of DMRS or BLER of the received GC-PDCCH and judging by the UE.

In summary, with the method for wireless communications according to the embodiment, the GC-PDCCH is transmitted in multiple emitting beams after being beam-formed, so as to increase the probability that the UE receives the GC-PDCCH, thereby improving utilization efficiency of the GC-PDCCH.

It should be noted that above methods may be utilized in combination or separately. Details of the above methods are described in the first to third embodiments, and are not repeated here.

The technology according to the present disclosure is applicable to various products.

For example, the electronic apparatus 300 may be implemented as various base stations. The base station may be implemented as any type of evolution Node B (eNB) or gNB (a 5G base station). The eNB includes, for example, a macro eNB and a small eNB. The small eNB may be an eNB covering a cell smaller than a macro cell, such as a pico eNB, a micro eNB, and a home (femto) eNB. The case for the gNB is similar to the above. Alternatively, the base station may be implemented as any other type of base station, such as a NodeB and a base transceiver station (BTS). The base station may include a main body (that is also referred to as a base station apparatus) configured to control radio communication, and one or more remote radio heads (RRHs) disposed in a different place from the main body. In addition, various types of user equipments may each operate as the base station by temporarily or semi-persistently executing a base station function.

The electronic apparatus 100 or 200 may be implemented as various user equipments. The user equipment may be implemented as a mobile terminal (such as a smartphone, a tablet personal computer (PC), a notebook PC, a portable game terminal, a portable/dongle-type mobile router, and a digital camera device) or an in-vehicle terminal such as a car navigation apparatus. The user equipment may also be implemented as a terminal (also referred to as a machine type communication (MTC) terminal) that performs machine-to-machine (M2M) communication. In addition, the user equipment may be a wireless communication module (such as an integrated circuit module including a single chip) mounted on each of the terminals described above.

### [Application examples regarding a base station]

### (First application example)

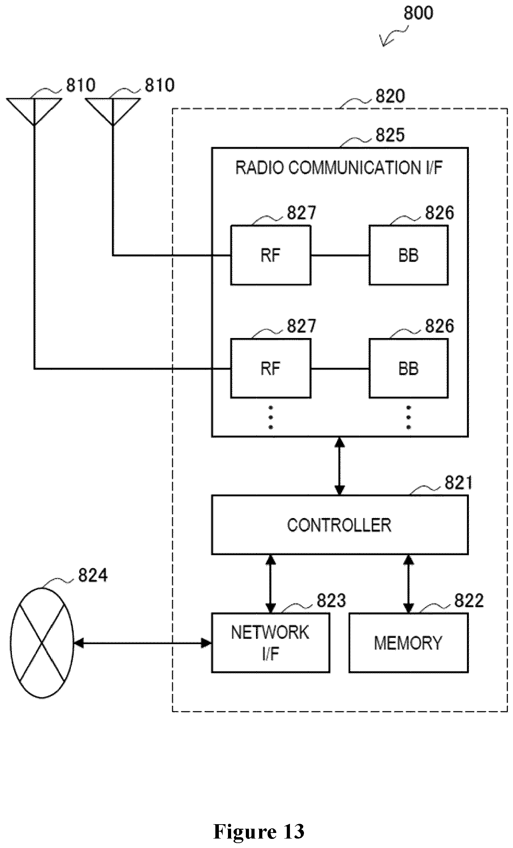

Figure 13 is a block diagram showing a first example of an exemplary configuration of an eNB or a gNB to which the technology according to the present disclosure may be applied. It should be noted that the following description is given by taking the eNB as an example, which is also applicable to the gNB. An eNB 800 includes one or more antennas 810 and a base station apparatus 820. The base station apparatus 820 and each of the antennas 810 may be connected to each other via a radio frequency (RF) cable.

Each of the antennas 810 includes a single or multiple antennal elements (such as multiple antenna elements included in a multiple-input multiple-output (MIMO) antenna), and is used for the base station apparatus 820 to transmit and receive wireless signals. As shown in Figure 13, the eNB 800 may include the multiple antennas 810. For example, the multiple antennas 810 may be compatible with multiple frequency bands used by the eNB 800. Although Figure 13 shows the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. If the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, Media Access Control (MAC), Radio Link Control (RLC), and a Packet Data Convergence Protocol (PDCP)). The BB processor 826 may have a part or all of the above-described logical functions instead of the controller 821. The BB processor 826 may be a memory storing communication control programs, or a module including a processor and a related circuit configured to execute the programs. Updating the program may allow the functions of the BB processor 826 to be changed. The module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives wireless signals via the antenna 810.

As shown in Figure 13, the radio communication interface 825 may include the multiple BB processors 826. For example, the multiple BB processors 826 may be compatible with multiple frequency bands used by the eNB 800. The radio communication interface 825 may include multiple RF circuits 827, as shown in Figure 13. For example, the multiple RF circuits 827 may be compatible with multiple antenna elements. Although Figure 13 shows the example in which the radio communication interface 825 includes the multiple BB processors 826 and the multiple RF circuits 827, the radio communication interface 825 may also include a single BB processor 826 and a single RF circuit 827.

In the eNB 800 shown in Figure 13, the transceiver of the electronic apparatus 300 may be implemented by the radio communication interface 825. At least a part of functions may be implemented by the controller 821. For example, the controller 821 may determine the multiple emitting beams for transmitting the GC-PDCCH by implementing functions of the first determining unit 301 and the second determining unit 302, and configure the CORESET by implementing functions of the configuration unit 303 to notify the UE of information of the space domain resources of the emitting beam.

### (Second application example)

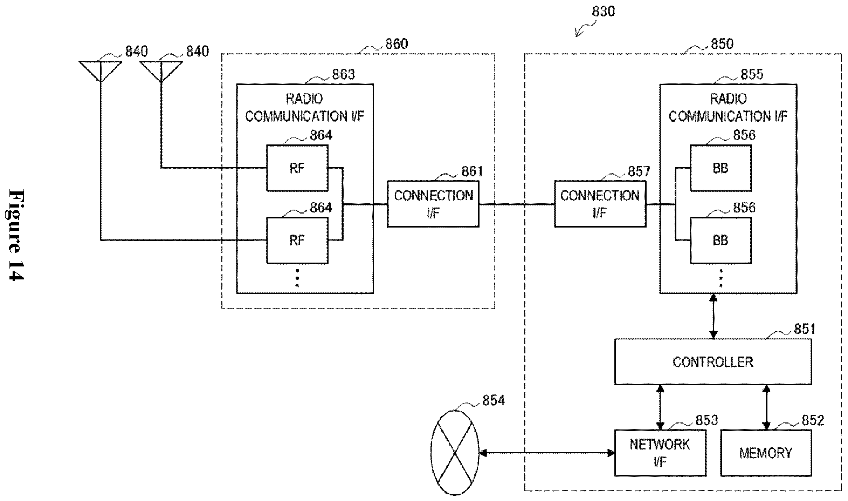

Figure 14 is a block diagram showing a second example of an exemplary configuration of the eNB or gNB to which the technology according to the present disclosure may be applied. It should be noted that the following description is given by taking the eNB as an example, which is also applied to the gNB. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 14, the eNB 830 may include the multiple antennas 840. For example, the multiple antennas 840 may be compatible with multiple frequency bands used by the eNB 830. Although Figure 14 shows the example in which the eNB 830 includes the multiple antennas 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 13.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 13, except that the BB processor 856 is connected to an RF circuit 864 of the RRH 860 via the connection interface 857. As show in Figure 14, the radio communication interface 855 may include the multiple BB processors 856. For example, the multiple BB processors 856 may be compatible with multiple frequency bands used by the eNB 830. Although Figure 14 shows the example in which the radio communication interface 855 includes the multiple BB processors 856, the radio communication interface 855 may also include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, the RF circuit 864. The RF circuit 864 may include, for example, a mixer, a filter and an amplifier, and transmits and receives wireless signals via the antenna 840. The radio communication interface 863 may include multiple RF circuits 864, as shown in Figure 14. For example, the multiple RF circuits 864 may support multiple antenna elements. Although Figure 14 shows the example in which the radio communication interface 863 includes the multiple RF circuits 864, the radio communication interface 863 may also include a single RF circuit 864.

In the eNB 830 shown in Figure 14, the transceiver of the electronic apparatus 300 may be implemented by the radio communication interface 825. At least a part of functions may be implemented by the controller 821. For example, the controller 821 may determine the multiple emitting beams for transmitting the GC-PDCCH by implementing functions of the first determining unit 301 and the second determining unit 302, and configure the CORESET by implementing functions of the configuration unit 303 to notify the UE of information of the space domain resources of the emitting beam.

### [Application examples regarding user equipment]

### (First application example)

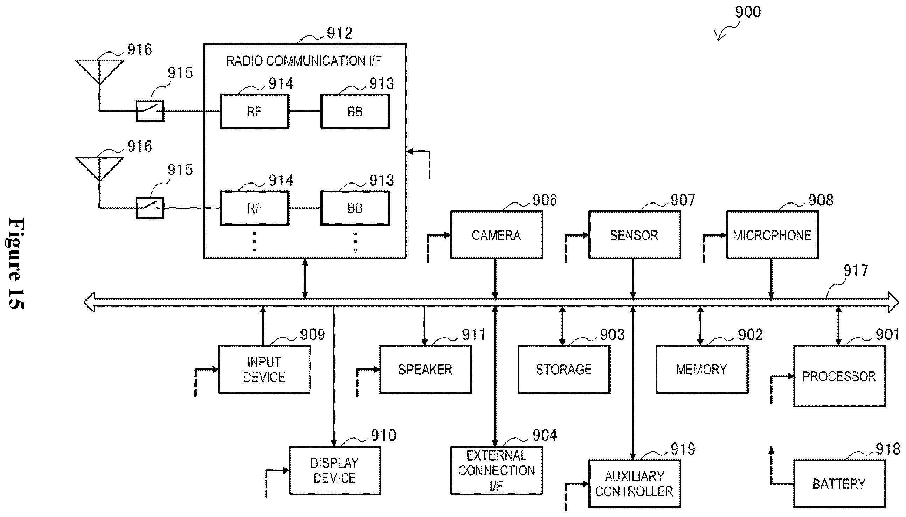

Figure 15 is a block diagram illustrating an example of exemplary configuration of a smartphone 900 to which the technology of the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smartphone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds that are inputted to the smartphone 900 to audio signals. The input device 909 includes, for example, a touch sensor configured to detect touch onto a screen of the display device 910, a keypad, a keyboard, a button, or a switch, and receives an operation or information inputted from a user. The display device 910 includes a screen (such as a liquid crystal display (LCD) and an organic light-emitting diode (OLED) display), and displays an output image of the smartphone 900. The speaker 911 converts audio signals that are outputted from the smartphone 900 to sounds.

The radio communication interface 912 supports any cellular communication scheme (such as LTE and LTE-advanced), and performs a wireless communication. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 15 shows a case that one RF link is connected to one antenna, which is only illustrative, and a case that one RF link is connected to multiple antennas through multiple phase shifters may also exist. The radio communication interface 912 may be a chip module having the BB processor 913 and the RF circuit 914 integrated thereon. The radio communication interface 912 may include multiple BB processors 913 and multiple RF circuits 914, as shown in Figure 15. Although Figure 15 shows the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a radio local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smartphone 900 may include the multiple antennas 916, as shown in Figure 15. Although Figure 15 shows the example in which the smartphone 900 includes the multiple antennas 916, the smartphone 900 may also include a single antenna 916.

Furthermore, the smartphone 900 may include the antenna 916 for each wireless communication scheme. In this case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smart phone 900 shown in Figure 15 via feeder lines that are partially shown as dashed lines in Figure 15. The auxiliary controller 919, operates a minimum necessary function of the smart phone 900, for example, in a sleep mode.

In the smart phone 900 shown in Figure 15, the transceiver of the electronic apparatus 100 or the electronic apparatus 200 may be implemented by the radio communication interface 912. At least a part of functions may be implemented by the processor 901 or the auxiliary controller 919. For example, the processor 901 or the auxiliary controller 919 may determine the receiving beam for receiving the GC-PDCCH by implementing functions of the first determining unit 101 and the second determining unit 102, and perform the blind-decoding on the GC-PDCCH and/or a beam pair link failure detecting by implementing functions of the detecting unit 201.

### (Second application example)

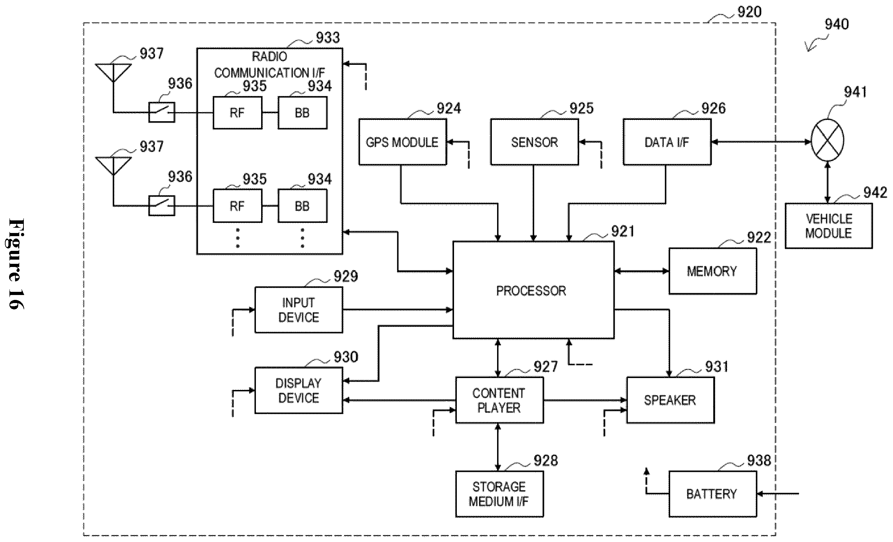

Figure 16 is a block diagram showing an example of a schematic configuration of a car navigation apparatus 920 to which the technology according to the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program that is executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or content that is reproduced. The speaker 931 outputs a sounds for the navigation function or the content that is reproduced.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 16. Although Figure 16 shows the example in which the radio communication interface 933 includes the multiple BB processors 934 and the multiple RF circuits 935, the radio communication interface 933 may also include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used by the radio communication interface 933 to transmit and receive wireless signals. As shown in Figure 16, the car navigation apparatus 920 may include the multiple antennas 937. Although Figure 16 shows the example in which the car navigation apparatus 920 includes the multiple antennas 937, the car navigation apparatus 920 may also include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 16 via feeder lines that are partially shown as dash lines in Figure 16. The battery 938 accumulates power supplied from the vehicle.

In the car navigation apparatus 920 shown in Figure 16, the transceiver of the electronic apparatus 100 or the electronic apparatus 200 may be implemented by the radio communication interface 912. At least a part of functions may be implemented by the processor 901 or the auxiliary controller 919. For example, the processor 901 or the auxiliary controller 919 may determine the receiving beam for receiving the GC-PDCCH by implementing functions of the first determining unit 101 and the second determining unit 102, and perform the blind-decoding on the GC-PDCCH and/or a beam pair link failure detecting by implementing the functions of the detecting unit 201.

The technology of the present disclosure may also be implemented as an in-vehicle system (or a vehicle) 940 including one or more blocks of the car navigation apparatus 920, the in-vehicle network 941 and a vehicle module 942. The vehicle module 942 generates vehicle data (such as a vehicle speed, an engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

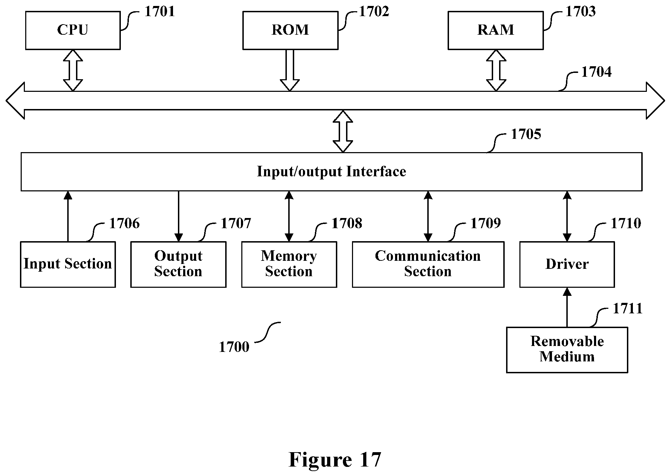

In the case where the present disclosure is realized with software or firmware, a program constituting the software is installed in a computer with a dedicated hardware structure (e.g. the general computer 1700 shown in Figure 17) from a storage medium or network, wherein the computer is capable of implementing various functions when installed with various programs.

In Figure 17, a central processing unit (CPU) 1701 executes various processing according to a program stored in a read-only memory (ROM) 1702 or a program loaded to a random access memory (RAM) 1703 from a memory section 1708. The data needed for the various processing of the CPU 1701 may be stored in the RAM 1703 as needed. The CPU 1701, the ROM 1702 and the RAM 1703 are linked with each other via a bus 1704. An input/output interface 1705 is also linked to the bus 1704.

The following components are linked to the input/output interface 1705: an input section 1706 (including keyboard, mouse and the like), an output section 1707 (including displays such as a cathode ray tube (CRT), a liquid crystal display (LCD), a loudspeaker and the like), a memory section 1708 (including hard disc and the like), and a communication section 1709 (including a network interface card such as a LAN card, modem and the like). The communication section 1709 performs communication processing via a network such as the Internet. A driver 1710 may also be linked to the input/output interface 1705, if needed. If needed, a removable medium 1711, for example, a magnetic disc, an optical disc, a magnetic optical disc, a semiconductor memory and the like, may be installed in the driver 1710, so that the computer program read therefrom is installed in the memory section 1708 as appropriate.

In the case where the foregoing series of processing is achieved through software, programs forming the software are installed from a network such as the Internet or a memory medium such as the removable medium 1711.

It should be appreciated by those skilled in the art that the memory medium is not limited to the removable medium 1711 shown in Figure 17, which has program stored therein and is distributed separately from the apparatus so as to provide the programs to users. The removable medium 1711 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1702 and the memory section 1708 in which programs are stored, and can be distributed to users along with the device in which they are incorporated.

To be further noted, in the apparatus, method and system according to the present disclosure, the respective components or steps can be decomposed and/or recombined. These decompositions and/or recombinations shall be regarded as equivalent solutions of the disclosure. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

## Claims

1. An electronic apparatus for wireless communications, comprising:
processing circuitry, configured to:
determine beam pairs being paired between user equipment (UE) and a base station (BS), each of the beam pairs comprising an emitting beam of the BS and a receiving beam of the UE; and
determine one or more receiving beams to be used in receiving a group-common physical downlink control channel (GC-PDCCH) from the BS, the GC-PDCCH carrying control information for a group of UE and being transmitted in a plurality of emitting beams after being beam-formed by the BS.

2. The electronic apparatus according to claim 1, wherein, the processing circuitry is configured to determine, based on a control resource set (CORESET) configured for the UE by the BS, a receiving beam to be used in receiving the GC-PDCCH, wherein, the CORESET comprises time-frequency resources and space domain resources for the GC-PDCCH.

3. The electronic apparatus according to claim 2, wherein, the space domain resources for the GC-PDCCH comprise directivity information for the beam-forming.

4. The electronic apparatus according to claim 2, wherein, the processing circuitry is configured to acquire information of the CORESET via a high level signaling.

5. The electronic apparatus according to claim 4, wherein, the high level signaling is a radio resource control (RRC) signaling, wherein the CORESET in the RRC signaling comprises a group-common transmission configuration indicator (GC-TCI) to indicate the space domain resources for the GC-PDCCH.

6. The electronic apparatus according to claim 4, wherein, the high level signaling comprises both RRC signaling and media access control (MAC) signaling, the CORESET in the RRC signaling comprises GC-TCIs to indicate the space domain resources for the GC-PDCCH, and the MAC signaling is used to further select a GC-TCI in the RRC signaling.

7. The electronic apparatus according to claim 5 or 6, wherein, the GC-TCI comprises information of a reference signal beam which is quasi co-located with a GC-PDCCH beam.

8. The electronic apparatus according to claim 5 or 6, wherein, one CORESET comprises one or more GC-TCIs.

9. The electronic apparatus according to claim 2, wherein the processing circuitry is further configured to determine the emitting beam of the BS based on the space domain resources, and determine a receiving beam paired with the emitting beam as the receiving beam to be used in receiving the GC-PDCCH.

10. The electronic apparatus according to claim 9, wherein, the processing circuitry is further configured to determine, based on link quality of the beam pairs comprising the determined emitting beam of the BS, the receiving beam for receiving the GC-PDCCH.

11. The electronic apparatus according to claim 1, wherein, the processing circuitry is configured to determine a receiving beam in a beam pair with the best link quality as the receiving beam for receiving the GC-PDCCH.

12. The electronic apparatus according to claim 1, wherein, the processing circuitry is further configured to perform blind-decoding on the GC-PDCCH in a search space of time-frequency resources where the GC-PDCCH is received, and use a group common radio network temporary identifier (GC-RNTI) to judge whether the GC-PDCCH is for a present UE.

13. The electronic apparatus according to claim 1, wherein, the processing circuitry is further configured to acquire, from the base station, a monitor period configuration for monitoring the GC-PDCCH, and perform decoding of the GC-PDCCH based on the monitor period configuration.

14. The electronic apparatus according to claim 1, wherein, the processing circuitry is further configured to measure reference signal receiving power (RSRP) of a demodulation reference signal (DMRS) or a block error rate (BLER) of the received GC-PDCCH, to judge whether a link of a beam pair formed by the emitting beam and the receiving beam fails.

15. The electronic apparatus according to claim 1, wherein, the GC-PDCCH is transmitted in a plurality of beams after being beam-formed by a plurality of transmit receive points (TRPs) respectively.

16. An electronic apparatus for wireless communications, comprising:
processing circuitry, configured to:
determine beam pairs being paired between user equipment (UE) and a base station (BS), each of the beam pairs comprising an emitting beam of the BS and a receiving beam of the UE; and
determine a plurality of emitting beams to be used for transmitting a group-common physical downlink control channel (GC-PDCCH), the GC-PDCCH being transmitted in the plurality of emitting beams by being beam-formed and carrying control information for a group of UE.

17. The electronic apparatus according to claim 16, wherein, the processing circuitry is configured to configure a control resource set (CORESET) for the UE, wherein, the CORESET comprises time-frequency resources and space domain resources for the GC-PDCCH.

18. The electronic apparatus according to claim 17, wherein, the space domain resources for the GC-PDCCH comprises directivity information for the beam-forming.

19. The electronic apparatus according to claim 17, wherein, the processing circuitry is configured to provide information of the CORESET to the UE via a high level signaling.

20. The electronic apparatus according to claim 19, wherein, the high level signaling is a radio resource control (RRC) signaling, wherein the CORESET in the RRC signaling comprises a group-common transmission configuration indicator (GC-TCI) to indicate the space domain resources for the GC-PDCCH.

21. The electronic apparatus according to claim 19, wherein, the high level signaling comprises both RRC signaling and media access control (MAC) signaling, the CORESET in the RRC signaling comprises GC-TCIs to indicate the space domain resources for the GC-PDCCH, and the MAC signaling is used to further select a GC-TCI in the RRC signaling.

22. The electronic apparatus according to claim 20 or 21, wherein, the GC-TCI comprises information of a reference signal beam which is quasi co-located with a GC-PDCCH beam.

23. The electronic apparatus according to claim 20 or 21, wherein, one CORESET comprises one or more GC-TCIs.

24. The electronic apparatus according to claim 16, wherein the processing circuitry is further configured to determine the emitting beam to be used for transmitting based on one or more of the following: information of beam pairs between respective UE in the group of UE and the BS; and priority levels of the respective UE.

25. The electronic apparatus according to claim 24, wherein, the priority level of UE comprises whether the UE is scheduled.

26. The electronic apparatus according to claim 16, wherein, the processing circuitry is further configured to set, for the UE, a monitor period configuration for monitoring the GC-PDCCH, and perform transmitting of the GC-PDCCH based on the monitor period configuration.

27. The electronic apparatus according to claim 26, wherein, when the monitor period configuration indicates that the monitor period is more than one slot, the processing circuitry is configured to transmit the GC-PDCCH in a plurality of slots respectively.

28. The electronic apparatus according to claim 16, wherein, the electronic apparatus is located at a TRP side, and the processing circuitry is configured to transmit the GC-PDCCH with the same contents along with other TRPs in the same cell.

29. The electronic apparatus according to claim 16, wherein, the processing circuitry is configured to acquire a beam pair link failure indicator from the UE, wherein the beam pair link failure indicator is obtained by measuring and judging reference signal receiving power (RSRP) of a demodulation reference signal (DMRS) or a block error rate (BLER) of the received GC-PDCCH by the UE.

30. A method for wireless communications, comprising:
determining beam pairs being paired between user equipment (UE) and a base station (BS), each of the beam pairs comprising an emitting beam of the BS and a receiving beam of the UE; and
determining one or more receiving beams to be used in receiving a group-common physical downlink control channel (GC-PDCCH) from the BS, the GC-PDCCH carrying control information for a group of UE and being transmitted in a plurality of emitting beams after being beam-formed by the BS.

31. A method for wireless communications, comprising:
determining beam pairs being paired between user equipment (UE) and a base station (BS), each of the beam pairs comprising an emitting beam of the BS and a receiving beam of the UE; and
determining a plurality of emitting beams to be used for transmitting a group-common physical downlink control channel (GC-PDCCH), the GC-PDCCH being transmitted in the plurality of emitting beams by being beam-formed and carrying control information for a group of UE.

32. A computer-readable storage medium having computer-executable instructions stored thereon, which when being executed, cause the method for wireless communications according to claim 30 or 31 to be performed.
